# EUROPEAN PATENT APPLICATION

(11) **EP 4 432 032 A1**
(43) Date of publication of application: **18.09.2024**
(21) Application number: 23161362.1
(22) Date of filing: 13.03.2023
(51) Int. Cl.: G05B 23/02

(54) **IDENTIFYING AND/OR ANALYZING OPERATING STATES OF AN INDUSTRIAL PROCESS**

(71) Applicant: ABB SCHWEIZ AG, 5400 Baden (CH)
(72) Inventor: TAN, Ruomu, 68163 Mannheim (DE); KOTRIWALA, Arzam Muzaffar, 68526 Ladenburg (DE); SONG, Chen, 69115 Heidelberg (DE); HOLLENDER, Martin, 69221 Dossenheim (DE); FECHNER, Tobias, 68163 Mannheim (DE)
(74) Representative: Maiwald GmbH

(57) **Abstract**

A computer-implemented method (100) for identifying and/or analyzing operating states (2) of an industrial process (1) that is being executed on an industrial plant, comprising the steps of:
• obtaining (110) at least one time series (3a) of measurement values of at least one process variable (3) of the industrial process (1);
• determining (120), from the at least one time series (3a), using a given classifying logic (4), for at least one point in time in the time series (3a), at least one operating state (2) of the industrial process (1); and
• from one or more of:
∘ at least one statistical quantity (2a) computed over multiple operating states (2);
∘ at least one sequence (2b) of operating states (2);
∘ the duration (2c) for which at least one operating state (2) lasts; and
∘ a combination of at least one operating state (2) and measurement values from the time series (3a) that relate to this operating state (2),
determining (130) one or more of:
∘ at least one quantity of interest (5) that further characterizes the operating state (2) of the industrial process (1);
∘ a fitness (6a) of at least one given model (6) for explaining the time series (3a) of measurement values; and
∘ a fitness (3b) of at least one measurement value of the time series (3a) as a training example for the training of at least one machine learning model (1),
and/or
∘ training (140) a model (6) that describes the behavior of the industrial process (1) in the operating state (2) determined by the classifying logic (4).

## Description

### FIELD OF THE INVENTION

The invention relates to the monitoring and analysis of industrial processes that are executed on industrial plants.

### BACKGROUND

The state and behavior of an industrial process, such as a chemical process, are characterized by a large quantity of process variables. It is a frequent task to predict the future development of the process, or to derive insights from past behavior of the process, by analyzing time series of process variables. To this end, machine learning models trained on past data may be used.

It has been found that, for many industrial processes, time series of measurement values of process variables tend to be very heterogeneous in nature. This makes the analysis of the data, and in particular the training of machine learning models on the data, difficult.

### OBJECTIVE OF THE INVENTION

It is therefore an objective of the present invention to facilitate the analysis of time series of measurement values of process variables and the training of machine learning models on such data.

This objective is achieved by a computer-implemented analysis method according to a first independent claim and another computer-implemented training method according to a second independent claim. Further advantageous embodiments are detailed in the respective dependent claims.

### DISCLOSURE OF THE INVENTION

The invention provides a computer-implemented method for identifying and/or analyzing operating states of an industrial process that is being executed on an industrial plant. The state and/or behavior of this industrial process is characterized by a plurality of process variables. Examples of such process variables include temperatures, pressures, voltages, amperages, fill levels, concentrations of substances, and mass flows.

At least one time series of measurement values of at least one process variable of the industrial process is obtained. For example, the measurement values may be read out from an on-line monitoring of the industrial process. But the measurement values may also, for example, be obtained from a plant historian.

From the at least one time series, at least one operating state of the industrial process is determined using a given classifying logic. That is, at least a point in time, and/or a stretch of time, in the time series is annotated with the at least one operating state of the industrial process. Examples of operating states include:
- the process is shutdown;
- the process is running at full capacity;
- the process is running at partial capacity;
- the industrial plant is running in a cleaning and/or maintenance mode;
- the process is currently using energy source X out of several available energy sources.
By "at least one operating state", it is meant that, e.g., if the industrial process is changing from one operating state to another at a particular point in time, this may be construed to be the end of the previous state and at the same time the beginning of a new state. Also, a coarser-grained state and finer-grained sub-states of this coarser-grained state may be all determined in one go.

For example, the distinction whether the process is shutdown or running at all may be made according to simple indicators in the process variables already, such as the rotating speed of a pump, compressor or other rotating equipment, or a power consumption.

The operating states determined in this manner, and/or combinations of the states and the measurement values, may then be exploited to determine one or more quantities of interest that are sought in connection with the industrial process, and/or with the explaining of the behavior of the industrial process by one or more models.

For example, the duration for which at least one operating state lasts may be evaluated. In another example, at least one sequence of operating states may be evaluated. Also, at least one statistical quantity computed over multiple operating states may be evaluated. For example, the statistical quantity may relate to a particular property of the respective operating states. Examples of statistical quantities include the mean, median and/or standard deviation of said property. In one example, the property of the respective operating state may be the duration for which this operating state lasts.

The sought quantity that is determined in this manner may, in one example, be at least one quantity of interest that further characterizes the operating state of the industrial process. For example, such quantity may be a prediction of at least one process variable, and/or a prediction of operating states to which the process will evolve. In this respect, it has been found that the operating state of the industrial process is a very important piece of information on top of the time series data itself. For example, one and the same time series of measurement values may mean different things depending on the operating state of the process.

In a simple example, in a thin-film coating system where a workpiece is brought into a vacuum chamber and material is deposited on it by sputtering, the pressure in the vacuum chamber should be the base pressure of the vacuum (e.g., on the order of 10⁻⁶ mbar) when the system is idle and no material is being sputtered. By contrast, when there is sputtering gas (such as argon) in the chamber and material is actively being deposited, the pressure should be much higher (e.g., on the order of 10⁻³ mbar). Thus, a low pressure of 10⁻⁶ mbar in the idle state means that everything is OK, whereas the same low pressure in the active sputtering state means that the supply of sputtering gas is not working. Likewise, a high pressure of 10⁻³ mbar in the active sputtering state means everything is OK, whereas the same high pressure in the idle state means that there is likely a leak in the vacuum chamber.

In another example, the speed of a chemical reaction in the industrial process may depend on the quantities of the educts in the batch and/or on their initial temperatures. For example, if the batch is only 1/4 of the maximum quantity, then the educts intermix quicker, and it takes a shorter time to heat them up to the required reaction temperature. Thus, which evolution of the time series of measurement values is to be considered "normal" depends on the size of the batch.

In another example, a power plant may have very distinct operating states, e.g., a start-up phase, a steady state, an increasing or decreasing of output power, and a shutdown phase. The behavior of the power plant is governed and described by very distinct laws and models in each state. For example, the description of the behavior is rather simple in the steady state where many derivatives of quantities with respect to time are zero. An increase or decrease of output power may be described with a model comprising differential equations in the quantities that are subject to dynamics. Start-up and shutdown are even more complex, and not all data required for a closed description of the dynamics with differential equations might be available. Here, a machine learning model may model the behavior in a manner that is sufficiently accurate for the application at hand, using the data that is available.

It was also found that the fitness of at least one given model for explaining the time series of measurement values is dependent on the operating state as well. Two very frequently used kinds of models are:
- models that are based on a-priori assumptions about the industrial process, such as a physical or chemical law that governs the process; and
- trained machine learning models that do not require such assumptions.

A model that is based on any assumptions is only valid as long as its assumptions are sufficiently met, and whether the assumptions are met may depend on the operating state of the process. For example, when educts of a chemical process are filled into a reaction vessel and heated towards the temperature at which they will start reacting, the development of the temperature inside the vessel is basically governed by the transfer of heat from a heater of the vessel into the mixture of educts. The mixture of educts acts as a thermal mass whose inertia slows the increase in temperature. But once the activation temperature of the reaction has started, this model is no longer valid. Rather, the reaction of the mixture of educts may act as a heat sink (if the reaction is endothermal) or as an additional heat source (if the reaction is exothermal). The model needs to be expanded to account for the new heat sink or heat source.

In another example, at least one educt may be brought into the process using an arrangement of multiple parallel pumps or compressors. The dynamics of the process may then be dependent on how many, and which, pumps or compressors are used. The changed dynamics may necessitate adaption of the used model, or a change to an entirely new model based on an amended set of assumptions.

A trained machine learning model generalizes to data that has not seen in training only insofar as the unseen data still belongs to the same domain and/or distribution of data on which it was trained. If the model has been trained only on data that relates to a particular operating state of the industrial process, then data that relates to a different operating state may be out of distribution.

Also, depending on how heterogeneous the operating states are, it has been found that it may not be practical to capture the behavior of the industrial process in all of these operating states in one single machine learning model. Rather, it may be appropriate to use, and train, separate models for different operating states. This means that a model that has been trained using all the data may not perform as well as models trained on and applied to data from one particular operating state.

Likewise, the fitness of at least one measurement value of the time series as a training example for the training of at least one machine learning model may be a quantity of interest derived using operating states, and/or sequences or statistics of operating states.

For example, if the machine learning model is to predict the behavior of the industrial process in a normal operating state, and some training examples happen to be acquired at a time where the industrial plant is in a special cleaning state, using these data for training may "poison" the model, so that it will no longer give sufficiently accurate predictions for the normal operating state. Thus, training samples that relate to the cleaning state are not fit as training samples for a model that is to describe the normal operating state of the industrial process.

Alternatively or in combination to the determining of concrete sought quantities, based on the same inputs that can be used to determine these sought quantities, a model that describes the behavior of the industrial process in the operating state determined by the classifying logic may be trained. That is, the model is specific to this particular operating state, and the operating state determined by the classification logic, and/or a segmentation of the time series into a sequence of multiple operating states, gives rise to the creation of this model. The model may then, for example, be used to predict, based on past data, the future behavior of the industrial process. It may also, for example, be used to determine whether the current behavior of the industrial process is normal or anomalous.

In a particularly advantageous embodiment, the determined operating state is part of a multi-level hierarchy of operating states in which at least one operating state has sub-states. For example, the multi-level hierarchy of possible operating states may be preset according to the application at hand. For one and the same process, for different purposes, different sub-divisions into multi-level hierarchies may be appropriate. That is, the operating state may first be obtained on a first, rather abstract level, and then more concrete or specific sub-states of this abstract first state may be determined. For example, the different levels of the hierarchy may differ in terms of how much analysis is required for determining a particular state. A more abstract state, which may already suffice for many uses, can be determined rather quickly, whereas determining one particular sub-state may require much more analysis that takes longer.

Also, the level of a priori knowledge that is necessary to determine a particular state may depend on the level of the hierarchy. Only little a priori knowledge may be required to determine a more abstract state, whereas more detailed a priori knowledge may be needed to determine a fine-grained sub-state. This means that the amount and the level of detail of available a priori knowledge, or the availability of prior knowledge in the first place, may determine how fine-grained the operating state may be determined in the multi-level hierarchy.

In a further particularly advantageous embodiment, the determining of the at least one operating state may comprise:
- determining a first operating state on a first level of the multi-level hierarchy ("first-level operating state"); and
- restricting the determining of a second operating state on a next level of the multi-level hierarchy ("second-level operating state") to operating states that are, according to the multi-level hierarchy, available as sub-states of the first operating state.

In this manner, inconsistencies between operating states determined on different levels of the multi-level hierarchy may be avoided. For example, a sub-state of a shutdown first-level state can never be used if it has been determined that the first-level state is actually a running state. Also, when progressively determining the operating state from one level to the next, time may be saved because the number of possibilities is more limited, and the accuracy of the finally obtained operating state will be improved.

In a further particularly advantageous embodiment, in the course of determining the at least one operating state, the time series is divided into segments during which the industrial process remains in a respective operating state. For each such segment, the respective operating state is determined. Determining whether the industrial process remains in one single operating state - whatever this operating state may be - throughout a stretch of time is quicker and more reliable than directly determining operating states for multiple points in time during that stretch of time and then comparing these operating states. Moreover, the longer the duration for which the industrial process remains in the same operating state, the more effort is saved by having to determine the concrete operating state only one single time until it next changes to another operating state.

One exemplary way to divide the at least one time series is to cluster the measurement values. For example, time-series k-means clustering or Toeplitz Inverse Covariance-Based Clustering, TICC, may be used. For example, measurement values that belong to a same cluster may be considered to relate to the same operating state. Another way is to detect change points that indicate transitions between operating states, and/or to detect steady states. All these and other sources of knowledge may be pooled.

In a further particularly advantageous embodiment, the determining of at least one operating state is based at least in part on probabilities for transitions of the industrial process from one given operating state to one of several possible next operating states. In this manner, further a priori knowledge as to which state is likely to transition into which other state may be put to use. For example, if the industrial process comprises multiple stages that correspond to multiple operating states, it is far more probable that these operating states follow in their intended order, and/or dynamics, than that one such operating state will suddenly transition into a state where the industrial process is aborted and shut down, discarding the work and materials already expended.

In a further particularly advantageous embodiment, at least one quantity of interest that further characterizes the operating state of the industrial process is indicative of whether the industrial process is in an anomalous state. As discussed above, whether one and the same time series of measurement values is indicative of an anomaly may depend on the operating state. Also, sequences of operating states, durations for which an operating state lasts, and statistical quantities computed over multiple operating states may, on their own, serve as aggregation products of the time series that indicate whether an anomaly is present. For example, if the filling or draining of a vessel takes much longer than expected, this may indicate that a pipe is clogged or a pump is not working.

In a further particularly advantageous embodiment, at least one quantity of interest that further characterizes the operating state of the process comprises a pattern and/or signature whose presence in the process variables of the industrial process indicates that the industrial process is in this particular operating state. That is, after having determined that a particular operating state S is present, rules of the kind "if a constellation of measurement values x, y and z is present, this indicates that operating state S is present" may be generated. Such rules in turn may be used in the future to classify operating states. But they may also be used for explaining and/or analyzing the behavior of the industrial process, and/or for tracking down root causes of problems. For example, if it turns out that the operating state of the process changes if a temperature at a particular place in the plant exceeds a certain value for more than 20 minutes, and there is no physical reason for such a dependency, something might be temperature-dependent that shouldn't be. For example, there might be a temperature-dependent fault in a capacitor, semiconductor or soldering point on a circuit board.

With so-determined rules, insights regarding the operating states of the industrial process may be gathered in a manner that is human-understandable and at the same time machine-processable for data analysis, machine learning tools, or even direct control of the industrial process. It is a widespread problem that such insights of a process are only present in the heads of process operators and not documented in a machine-processable form, or even not documented at all.

In a further particularly advantageous embodiment, the industrial plant is a power plant, a hydrocarbon refinery, a chemical production plant or a waste incineration plant. These kinds of plants, even though they operate very differently, have in common that the times at which they transition from one operating state to the next are not completely under the control of the plant operator, but may rather be triggered by influences that are not fully controllable by the operator. For example, a gas-fired power plant may be configured to run on biological digester gas. The chemical composition of this gas may not always be constant, and a change in this chemical composition might cause the combustion to enter another distinct regime that corresponds to a new operating state of the plant. The same applies to a waste incineration plant where the calorific value of the waste varies all the time and is not directly measurable. Likewise, when hydrocarbons are processed in a refinery, even if nominally the same sort of crude oil is used all the time, the exact composition may vary without a possibility to measure this in real time. In a chemical production plant, even though the processed educts may nominally always remain the same, the initial temperatures of the educts may vary. For example, they might be delivered in conventional tank trucks, so that their temperature is close to the outside temperature. As discussed before, the start of the intended reaction may depend on the local temperature inside the mixture of the educts. A temperature difference of 40-50 degrees Celsius between wintertime and summertime may well have an impact on how long it takes to start the intended reaction and transition from the operating state "preparing to react" to the operating state "reaction running".

The invention also provides a computer-implemented method for training a classifying logic for use in the method described above.

In the course of this method, at least one historic time series of at least one process variable of the industrial process is provided. Also, ground truth relating to the presence of particular operating states at particular points in time in the historic time series, and/or relating to probabilities of transitions between operating states is provided. This ground truth may be provided at any arbitrary level of granularity.

A to-be-trained classifying logic is provided. This classifying logic comprises at least one model whose behavior is characterized by a set of model parameters. For example, the classifying logic may comprise a function that can be fitted onto the data by varying parameters, and/or a trainable machine learning model.

Using this classifying logic, operating states at particular points in time, and/or transitions between operating states, are determined from the historic time series. Disagreements between of the so-determined operating states and/or transitions on the one hand, and the corresponding ground truth on the other hand, are then rated by a predetermined loss function. For example, if the ground truth designates certain operating states and/or transitions at particular points in time, and the classifying logic predicts operating states and/or transitions for the same points in time, the disagreement can be directly measured as a deviation (difference) from the ground truth. But even if the predictions on the one hand and the ground truth on the other hand do not relate to the same points in time (or stretches of time), a notion of disagreement can still be measured. For example, if it is physically not possible to go from the predicted operating state to the ground truth operating state in the time interval by which the respective time points are apart, there is a clear contradiction between the prediction and the ground truth.

The model parameters are optimized towards the goal that the further processing of historic time series results in an improvement of the rating by the loss function. The method can use any kind of available a priori knowledge as ground truth. For example, this a priori knowledge may comprise insights given by plant operators, or alarms or events gathered during execution of the industrial process.

In a particularly advantageous embodiment, the at least one model comprises a Hidden Markov Model for modelling a sequence of operating states, and/or transitions between operating states. This model starts from the assumption that transitions between states are governed by a set of rules that are in force without being explicitly known. For example, the trained model may stipulate that certain operating states shall happen in a particular sequence and there is no "turning back" in the other direction through this sequence.

In a further particularly advantageous embodiment, at least one model comprises a decision tree that identifies behavior of the time series that is indicative of a particular operating state. In this manner, signatures of certain operating states in the time series of measurement values may be discovered. These signatures may be used to detect the presence of the respective operating states in the future.

Because they are computer-implemented, the present methods may be embodied in the form of a software. The invention therefore also relates to one or more computer programs with machine-readable instructions that, when executed by one or more computers and/or compute instances, cause the one or more computers and/or compute instances to perform a method described above. Examples for compute instances include virtual machines, containers or serverless execution environments in a cloud. The invention also relates to a machine-readable data carrier and/or a download product with the one or more computer programs. A download product is a digital product with the computer program that may, e.g., be sold in an online shop for immediate fulfilment and download to one or more computers. The invention also relates to one or more compute instances with the one or more computer programs, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for identifying and/or analyzing operating states 2 of an industrial process 1 that is being executed on an industrial plant;
Figure 2: Exemplary analysis of a time series 3a of measurement values of a process variable 3;
Figure 3: Exemplary statistical analysis of a time series 3a for operating states 2 and transitions between them;
Figure 4: Exemplary embodiment of the method 200 for training a classifying logic 4.

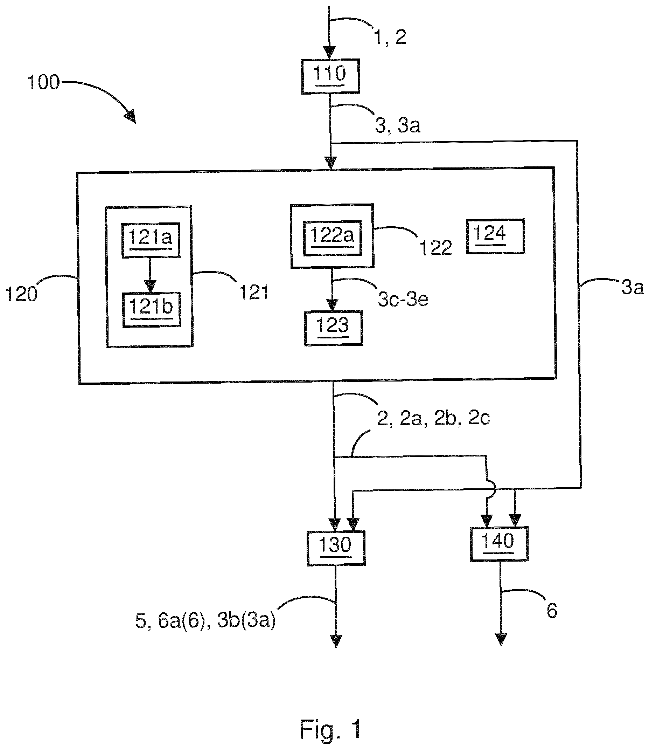

Figure 1 is a schematic flow chart of an embodiment of the method 100 for identifying and/or analyzing operating states 2 of an industrial process 1 that is being executed on an industrial plant.

In step 110, at least one time series 3a of measurement values of at least one process variable 3 of the industrial process 1 is obtained.

In step 120, at least one operating state 2 of the industrial process 1 is determined from the at least one time series 3a for at least one point in time in the time series 3a using a given classifying logic 4.

According to block 121, the determined operating state 2b may be part of a given multi-level hierarchy of operating states 2 in which at least one operating state 2 has sub-states 2', 2", 2"'.

In particular, according to block 121a, a first operating state 2 may be determined on a first level of the multi-level hierarchy. According to block 121b, the determining of a second operating state 2', 2", 2‴ on a next level of the multi-level hierarchy may then be restricted to operating states that are, according to the multi-level hierarchy, available as sub-states of the first operating state 2.

According to block 122, the time series 3a may be divided into segments 3c-3i during which the industrial process 1 remains in a respective operating state 2. According to block 123, the respective operating state 2 may then be determined for each such segment 3c-3i.

In particular, according to block 122a, the dividing into segments 3c-3i may comprise one or more of: clustering, change point detection, and steady state detection.

According to block 124, the determining of at least one operating state 2 may be based at least in part on probabilities for transitions of the industrial process 1 from one given operating state 2 to one of several possible next operating states 2.

In step 130, from one or more of:
- at least one statistical quantity 2a computed over multiple operating states 2;
- at least one sequence 2b of operating states 2;
- the duration 2c for which at least one operating state 2 lasts; and
- a combination of at least one operating state 2 and measurement values from the time series 3a that relate to this operating state 2,
one or more of:
- at least one quantity of interest 5 that further characterizes the operating state 2 of the industrial process 1;
- a fitness 6a of at least one given model 6 for explaining the time series 3a of measurement values; and
- a fitness 3b of at least one measurement value of the time series 3a as a training example for the training of at least one machine learning model 1
is determined.

Alternatively or in combination to the determining of concrete sought quantities, based on the same inputs that can be used to determine these sought quantities, in step 140, a model that describes the behavior of the industrial process in the operating state determined by the classifying logic may be trained. That is, the model is specific to this particular operating state, and the operating state determined by the classification logic, and/or a segmentation of the time series into a sequence of multiple operating states, gives rise to the creation of this model. The model may then, for example, be used to predict, based on past data, the future behavior of the industrial process. It may also, for example, be used to determine whether the current behavior of the industrial process is normal or anomalous.

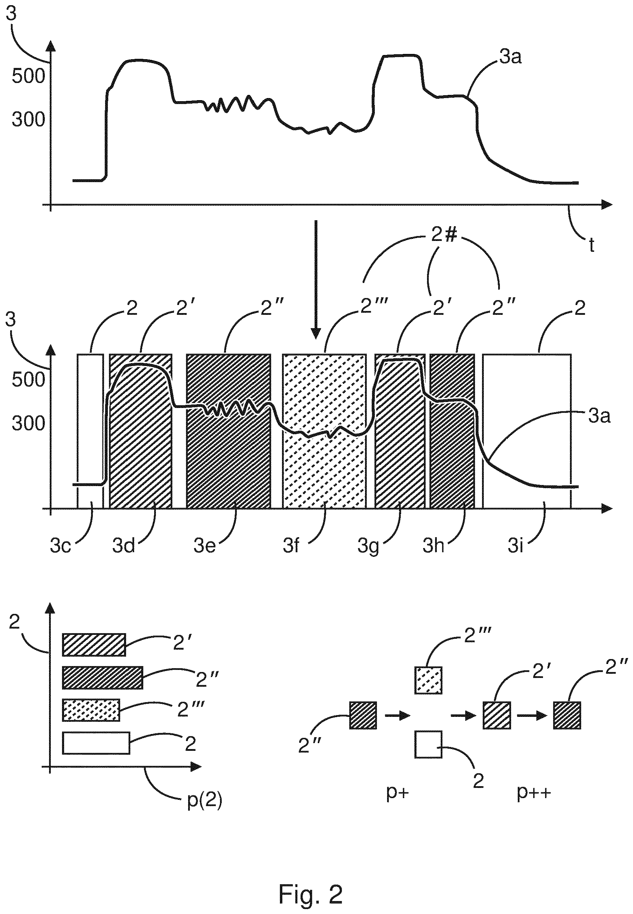

Figure 2 illustrates how an exemplary time series 3a of measurement values of a process variable 3 may be analyzed for operating states 2.

In the example shown in Figure 2, there is a first operating state 2 in which the industrial process 1 is shut down, and second operating state 2# in which the industrial process 1 is running. The second operating state 2# has three sub-states 2', 2" and 2"'. These sub-states 2', 2" and 2‴ are correlated with the value of the process variable 3. In the example shown in Figure 2, the running industrial process 1 is determined to be:
- in the first sub-state 2' when the value of the process variable 3 is above 500;
- in the second sub-state 2" when the value of the process variable 3 is between 300 and 500; and
- in the third sub-state 2‴ when the value of the process variable 3 is below 300.

The time series 3a is divided into segments 3c-3i that each relate to one single operating state 2, and then an operating state 2 is determined for each such segment 3c-3i.

Figure 2 also contains an inset that compares, for the different operating states 2, 2', 2" and 2"', the probabilities p(2) that, at any given point in the time series 3a, the industrial process 1 is in the respective state 2, 2', 2" and 2"'. It stands out that the probability for the state 2‴ is particularly low, which is a cue that this state 2‴ may be an anomalous state.

In Figure 2, it is also illustrated how probable transitions between operating states are. Transitions from the operating state 2" to one of the operating states 2 and 2‴ are probable (p+). Transitions from one of the operating states 2 and 2‴ to operating state 2', and from operating state 2' to operating state 2", are very likely (p++).

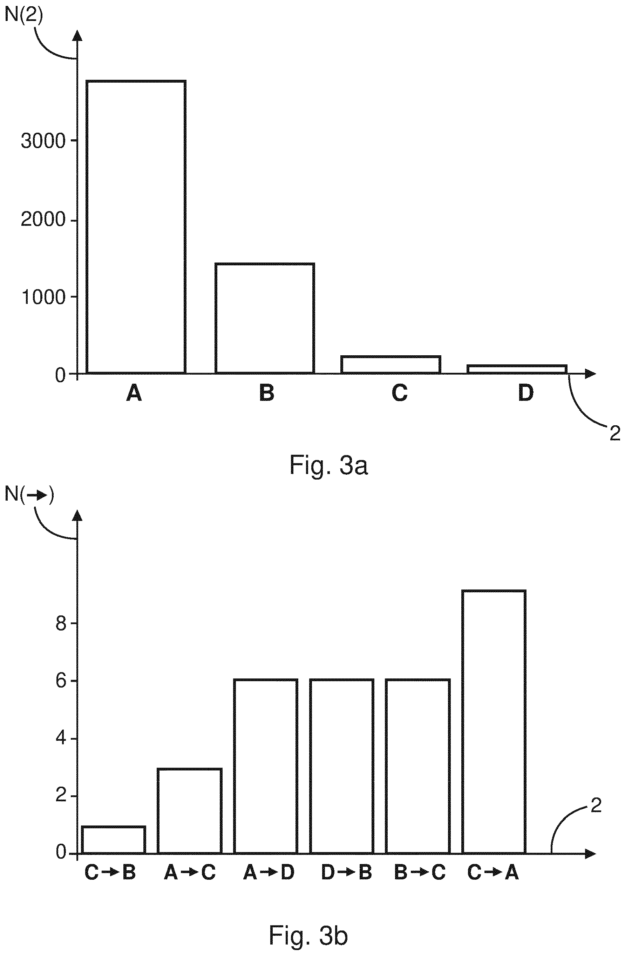

Figure 3 illustrates the statistical analysis of a time series 3a of measurement values of a process variable 3. In the example shown in Figure 3, there are four operating states A, B, C and D. The time series 3a comprises samples acquired at discrete points in time.

Figure 3a shows, for the operating states A, B, C and D, the number N(2) of the points in time for which it has been determined that the respective operating state A, B, C or D is present. In this example, the operating state A is by far the most frequent one, followed by operating state B. The operating states C and D are far less frequent, giving a cue that they might be anomalous.

Figure 3b shows, for a subset of the possible transitions between operating states A, B, C and D, the number N(→) of such transitions encountered in the time series 3a. It stands out that transitions from operating state C to operating state B, as well as from operating state A to operating state C, are the least frequent. By contrast, transitions from operating state C to operating state A are the most frequent.

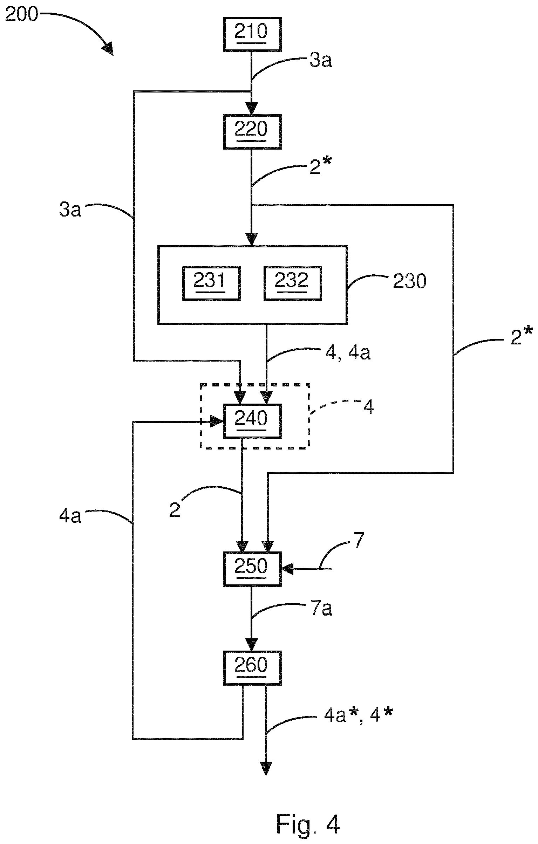

Figure 4 is a schematic flow chart of an embodiment of the method 200 for training a classifying logic 4 for use in the method 100 described above.

In step 210, at least one historic time series 3a of at least one process variable 3 of the industrial process 1 is provided.

In step 220, ground truth 2* relating to the presence of particular operating states 2 at particular points in time in the historic time series 3a, and/or relating to probabilities of transitions between operating states 2 is provided.

In step 230, a classifying logic 4 is provided. This classifying logic 4 has at least one model whose behavior is characterized by a set of model parameters 4a.

According to block 231, the at least one model 4 may comprise a Hidden Markov Model for modelling a sequence of operating states 2, and/or transitions between operating states 2.

According to block 232, at least one model 4 may comprise a decision tree that identifies behavior of the time series 3a that is indicative of a particular operating state 2.

In step 240, the classifying logic 4 determines operating states 2 at particular points in time, and/or transitions between operating states 2, from the historic time series 3a.

In step 250, a predetermined loss function 7 rates disagreements between the determined operating states 2 and/or transitions on the one hand, and the corresponding ground truth 2* on the other hand.

In step 260, the model parameters 4a are optimized towards the goal that further processing of historic time series 3a results in an improvement of the rating 7a by the loss function 7. The finally optimized state of the model parameters 4a is labelled with the reference sign 4a*. These parameters 4a* define the fully optimized state 4* of the model 4.

### List of reference signs:

- 1: industrial process
- 2, 2#: operating states of industrial process 1
- 2', 2", 2‴: sub-states in multi-level hierarchy
- 2*: ground truth for operating states 2
- 2a: statistical quantity, computed over multiple states 2
- 2b: sequence of operating states 2
- 2c: duration of operating states 2
- 3: process variable
- 3a: time series of values of process variable 3
- 3b: fitness of measurement value as training example
- 3c-3i: segments of time series 3a
- 4: classifying logic
- 4*: trained state of classifying logic 4
- 4a: parameters, characterize behavior of classifying logic 4
- 4a*: fully optimized state of parameters 4
- 5: quantity of interest
- 6: model for explaining time series 3a
- 6a: fitness of model 6
- 7: loss function
- 7a: rating by loss function 7
- 100: method for identifying and/or analyzing operating states 2
- 110: obtaining time series 3a
- 120: determining operating states 2 from time series 3a
- 121: using operating states 2 in multi-level hierarchy
- 121a: determining operating state 2 on first level of hierarchy
- 121b: restricting second operating state to available sub-states
- 122: dividing time series 3a into segments 3c-3i
- 122a: special methods for determining segments 3c-3i
- 123: determining operating state 2 for each segment 3c-3i
- 124: considering probabilities for transitions between states 2
- 130: determining quantities 5, 6a, 3b from inputs 2, 2a, 2b, 2c, 3a
- 200: method for training classifying logic 4
- 210: providing historic time series 3a
- 220: providing ground truth 2*
- 230: providing classifying logic 4
- 231: using Hidden Markov Model
- 232: using decision tree
- 240: determining operating states 2 using classifying logic 4
- 250: rating disagreements with ground truth 2* by loss function 7
- 260: optimizing model parameters 4a
- A, B, C, D: particular operating states 2

## Claims

1. A computer-implemented method (100) for identifying and/or analyzing operating states (2) of an industrial process (1) that is being executed on an industrial plant, comprising the steps of:
• obtaining (110) at least one time series (3a) of measurement values of at least one process variable (3) of the industrial process (1);
• determining (120), from the at least one time series (3a), using a given classifying logic (4), for at least one point in time in the time series (3a), at least one operating state (2) of the industrial process (1); and
• from one or more of:
∘ at least one statistical quantity (2a) computed over multiple operating states (2);
∘ at least one sequence (2b) of operating states (2);
∘ the duration (2c) for which at least one operating state (2) lasts; and
∘ a combination of at least one operating state (2) and measurement
values from the time series (3a) that relate to this operating state (2), determining (130) one or more of:
∘ at least one quantity of interest (5) that further characterizes the operating state (2) of the industrial process (1);
∘ a fitness (6a) of at least one given model (6) for explaining the time series (3a) of measurement values; and
∘ a fitness (3b) of at least one measurement value of the time series (3a) as a training example for the training of at least one machine learning model (1),
and/or
∘ training (140) a model (6) that describes the behavior of the industrial process (1) in the operating state (2) determined by the classifying logic (4).

2. The method (100) of claim 1, wherein the determined operating state (2) is (121) part of a multi-level hierarchy of operating states (2) in which at least one operating state (2) has sub-states (2', 2", 2‴).

3. The method of claim 2, wherein the determining (120) of the at least one operating state comprises:
• determining (121a) a first operating state (2) on a first level of the multi-level hierarchy; and
• restricting (121b) the determining of a second operating state (2', 2", 2‴) on a next level of the multi-level hierarchy to operating states that are, according to the multi-level hierarchy, available as sub-states of the first operating state (2).

4. The method (100) of any one of claims 1 to 4, wherein the determining (120) of the at least one operating state (2) comprises:
• dividing (122) the time series (3a) into segments (3c-3i) during which the industrial process (1) remains in a respective operating state (2); and
• determining (123), for each such segment (3c-3i), the respective operating state (2).

5. The method (100) of claim 4, wherein the dividing (122) into segments (3c-3i) comprises (122a) one or more of: clustering, change point detection, and steady state detection.

6. The method (100) of any one of claims 1 to 5, wherein the determining (120) of at least one operating state (2) is based (124) at least in part on probabilities for transitions of the industrial process (1) from one given operating state (2) to one of several possible next operating states (2).

7. The method (100) of any one of claims 1 to 6, wherein at least one quantity of interest (5) that further characterizes the operating state (2) of the industrial process (1) is indicative of whether the industrial process (1) is in an anomalous state.

8. The method (100) of any one of claims 1 to 7, wherein at least one quantity of interest (5) that further characterizes the operating state (2) of the industrial process (1) comprises a pattern and/or signature whose presence in the process variables (3) of the industrial process (1) indicates that the industrial process (1) is in this particular operating state (2).

9. The method (100) of any one of claims 1 to 8, wherein the industrial plant (1) is a power plant, a hydrocarbon refinery, a chemical production plant or a waste incineration plant.

10. A computer-implemented method (200) for training a classifying logic (4) for use in the method (100) of any one of claims 1 to 9, comprising the steps of:
• providing (210) at least one historic time series (3a) of at least one process variable (3) of the industrial process (1);
• providing (220) ground truth (2*) relating to the presence of particular operating states (2) at particular points in time in the historic time series (3a), and/or relating to probabilities of transitions between operating states (2);
• providing (230) a classifying logic (4) with at least one model whose behavior is **characterized by** a set of model parameters (4a);
• determining (240), by the classifying logic (4), from the historic time series (3a), operating states (2) at particular points in time, and/or transitions between operating states (2);
• rating (250), by a predetermined loss function (7), disagreements between the determined operating states (2) and/or transitions on the one hand, and the corresponding ground truth (2*) on the other hand; and
• optimizing (260) the model parameters (4a) towards the goal that further processing of historic time series (3a) results in an improvement of the rating (7a) by the loss function (7).

11. The method (200) of claim 10, wherein the at least one model (4) comprises (231) a Hidden Markov Model for modelling a sequence of operating states (2), and/or transitions between operating states (2).

12. The method (200) of any one of claims 10 or 11, wherein at least one model (4) comprises (232) a decision tree that identifies behavior of the time series (3a) that is indicative of a particular operating state (2).

13. One or more computer programs, comprising machine-readable instructions that, when executed on one or more computers and/or compute instances, cause the one or more computers and/or compute instances to perform a method (100, 200) of any one of claims 1 to 12.

14. A non-transitory machine-readable data carrier, and/or a download product, with the one or more computer programs of claim 13.

15. One or more computers and/or compute instances with the one or more computer programs of claim 13, and/or with the machine-readable data carrier and/or download product of claim 14.
